# EUROPEAN PATENT SPECIFICATION

(11) **EP 0 696 141 B1**
(45) Date of publication and mention of the grant of the patent: **22.09.1999**
(21) Application number: 95111375.2
(22) Date of filing: 20.07.1995
(51) Int. Cl.: H04N 7/167

(54) **Method for controlling different conditional access systems sending video, audio and data services and a receiver using the method**
Verfahren zur Steuerung verschiedener Systeme mit bedingtem Zugriff zur Übertragung von Video-, Audio- und Daten-Diensten und Empfänger zur Anwendung mit diesem Verfahren
Méthode pour controller différents systèmes à accès conditionnel transmettant des services de vidéo, d'audio et de données et récepteur utilisant la méthode

(30) Priority: 01.08.1994 FI 943582
(43) Date of publication of application: 07.02.1996
(73) Proprietor: NOKIA TECHNOLOGY GmbH, 75175 Pforzheim (DE)
(72) Inventor: Kangas, Mauri, FIN-21530 Paimio (FI)

(56) References cited:
- US-A- 5 282 249
- CABLE TV SESSIONS, MONTREUX, JUNE 10 - 15, 1993, no. SYMP. 18, 11 June 1993, POSTES;TELEPHONES ET TELEGRAPHES SUISSES, pages 733-742, XP000379321 FUTRO A T: "SMART CARD FOR CONDITIONAL ACCESS: A MARKETING AND SECURITY TOOL"
- PROCEEDINGS FROM ELEVEN TECHNICAL SESSIONS OF THE ANNUAL CONVENTION AND EXPOSITION OF THE NATIONAL CABLE TELEVISION ASSOCIATION, SAN FRANCISCO, JUNE 6 - 9, 1993, no. CONVENTION 42, 6 June 1993, RUTKOWSKI K, pages 128-132, XP000410492 TASKETT J: "SMART CARDS AS A REPLACEABLE SECURITY ELEMENT FOR TELEVISION DELIVERY ACCESS CONTROL"

## Description

The present invention concerns a method for controlling different conditional access systems sending video, audio and data services to the receivers entitled to receive said services, wherein each conditional access system encrypts the service to be transmitted, sends encrypted the decryption keys required in the receiver and sends the authorization messages. The invention also concerns a receiver to be used in the system.

A system for controlling access to broadcast transmissions is known form, for example, US-A-5 282 249. For transmission of digital video, audio and data signals it is possible to use either a transmission through air, satellite connection, cable television network, telephone/telenetwork or optical cable network, where digital information is transmitted to a large number of receivers. The digital information in question is often meant for free use of all receivers, but on the other hand, methods are required for controlling who/which of the receivers can get the information. This kind of transmission system has two lines of action in principle:
1) digital information is transmitted according to a predetermined plan, whereby each receiver can, either before or during the transmission, express his/her willingness to receive the information in question;
2) digital information is transmitted only in the case some of the receivers expresses his/her willingness to receive this information.

In the latter case it is also possible to let others than the orderer to receive the information in question, so that these other receivers can have a previously agreed right to receive the transmission or they can order it during the transmission or while waiting it to be started. As in this kind of digital signal transmission the unauthorized receiving is wished to be prevented, the bit stream is changed in a form, where the receivers have no chance to decrypt the contents of the transmitted data, except if they have the use of the keys required for decrypting the data. There are numerous methods available for encryption of the digital bit stream, and the systems using them should be as complicated and secure as possible, in order to make sure that eventual unauthorized data decryption efforts after the introduction of the system will not be succesful.

An essential part of the transmission of digital video signals is the transmission of audiosignals and in addition, when implementing the systems there also has to be the so called control data transmitted. In order to diversify the services, it is necessary for different applications in the future also to send data information that from the point of view of the transmission system can include almost any kind of information. All these parts of information should be, at least where applicable, transmitted encrypted so as to make sure that only the selected receivers can receive the information.

The digital television systems of the future provide transmission of several programs simultaneously in one and the same transport channel. In that case the signal to be transmitted is in the packet form and packets including audio and video information of different programs travel in turn in the transport channel. Several compression standards have been developed for transmitting video, audio and data signals as packets, one of which is MPEG-2 (Moving Picture Experts Group). This standard has been created by a joint working team of ISO (International Standards Organisation) and IEC (International Electrotechnical Commission). Various MPEG standards have been developed and according to the specifications determined by them e.g. transmission of information is accomplished in several different applications in the future. As for the standard a reference is made to the MPEG standard ISO/IEC 13818 known in the art. Accordingly, the coded video, audio and data information is packetized in so called PES packets (Packetized Elementary Stream). A packet, the length of which can vary, includes a header and a data part.

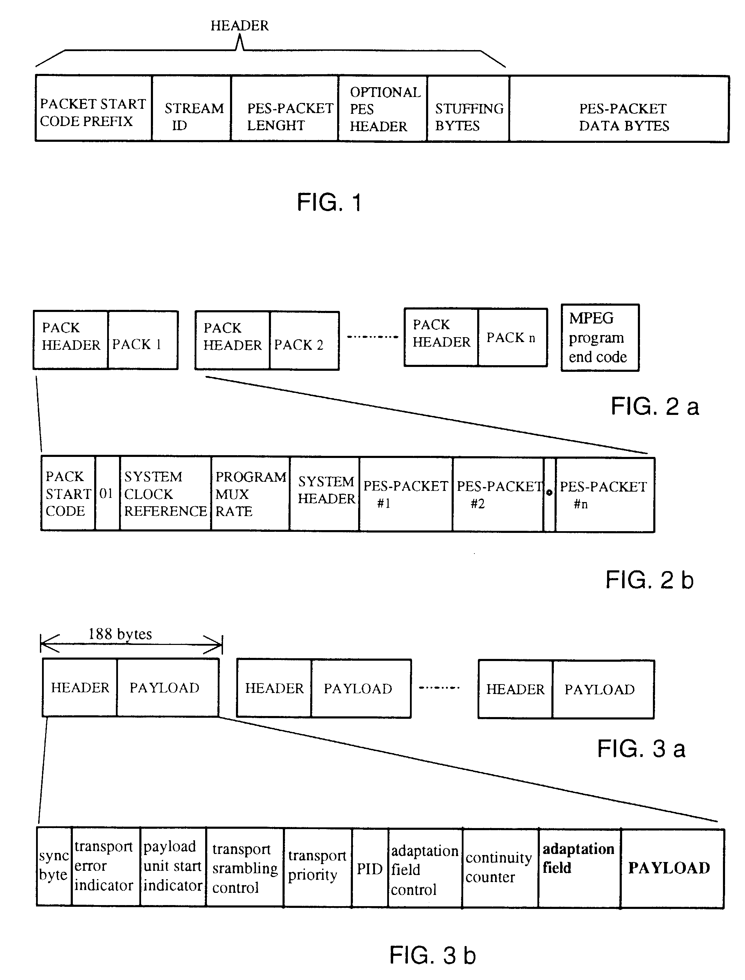

Figure 1 illustrates the construction of a PES packet. The header of the packet consists of the packet start code prefix, the stream ID, indication of the packet length, optional header and a number of stuffing bytes. After that follows the information part of the packet including data bytes, which part, as mentioned earlier, can include a block of coded audio, video or data signals of the program, one packet, however, including only one kind of signals. The length of one packet can be several kilobytes.

The MPEG standard determines two different types of bit stream forms: 1) Program Stream and 2) Transport Stream. The program stream includes a coded video and audio signal as above mentioned PES packets (Packetized Elementary Stream), each of which includes respectively a coded block of bit stream of a particular size, in other words, the video, audio and data signal of the program source are separately coded and cut into blocks of particular lengths, each of which is placed in the information part of the PES packet. The length of the blocks and thus the length of the PES packet can vary. Thus the video signal of the program consists of successive video PES packets, the audiosignal of successive audio PES packets, etc. e.g. all the information of a movie can be recorded as a program stream.

Figures 2a and 2b illustrate how the PES packets of figure 1 are placed as program stream packets. The program stream, figure 2a, consists of successive packets including a header of the packet and an information part PACK. Figure 2b showing the structure of one program stream packet, the so called packet layer, illustrates, that the program stream packet PACK includes several PES packets marked with #1, #2, ...,#n, that can include picture, voice, data etc. relating to the program. For clarity it can be demonstrated that the packet sequence of figure 2a illustrates e.g. one movie, the PES packetized audio and video signals of which are placed in the information parts of the program stream packets. The program stream ends with the end code "program end code".

When sending the information of a program source to the transmission path there has to be formed a so called transport stream, that is meant for transmitting video and audiosignals on a transmission path like a television broadcast, satellite, cable TV, telephone/tele cables, optical cables etc. If the program source is a record in a form of the program stream, e.g. a movie recorded on a CD-record, the program stream is first demultiplexed to separate audio, video and data PES packets. In case the program source sends audio, video and data signals, they will be decrypted and formed to PES packets. Regardless of the type of the source, the thus formed PES packets are placed in the transport stream. The structure of the transport stream is illustrated in figures 3a and 3b. The transport stream consists of transport stream packets of a fixed size of e.g. 188 bytes, figure 3a. The packet includes a header of varied length and a data part called payload including payload information. Figure 3b illustrates the construction of one transport stream packet. The header of the packet comprises 9 fields, the last of which is the so called adaptation field. Bytes of the PES packet are placed in the payload of the packet.

Every system within the range of the digital signal transmission has in common the encryption of the digital signals, wherein the video, audio and data information included in the digital bit stream is first encrypted in an encryption device and then decrypted in a receiving device. Essential for the use of each system is the Conditial Access System sending control data encrypted to the receivers, the control data being used for sending receiving rights to the receivers and for sending keys relating to the bit streams. Several conditional access systems and, consequently, several different encryption algorithms to be used for transmission of their control data can be in use, and further, one and the same conditional access system can use several different algorithms for encrypting the control data. In general one program supplier uses only one conditional access system, but authorizing messages and key distribution messages of other conditional access systems (practically those of other program suppliers), can be attached thereto, and the encryption of the service is made by only one conditional access system and the used keys are told to other systems, so that they can send the keys encrypted with their own encryption algorithms. From the receiver's point of view it is usual that several different conditional access systems offer their services to one and the same receiver. Thus the receiver is able to receive services from several different program suppliers, because authorizing messages and key distribution messages controlled by several different conditional access systems have been received.

Thus the above mentioned conditional access system means practically a conditional access system of any pay-TV system providing programs and other services against payment to paying customers, so that on one hand rights of use can be safely given to all prospective customers and on the other hand it is possible to prevent receivers not having ordered and not willing to order said rights of use from receiving the services in question. Thus, the operation of the conditional access system, hereafter called the CA system, comprises as essential parts the following functions:
1. Encryption of the transmitted service subject to a charge.
2. Transmission of the keys required for decrypting the encrypted service.
3. Transmission of authorization messages to the receivers.

For decrypting the service transmitted against payment the decryption keys have to be sent safely to the orderer, so that the messages transmitting the required keys are encrypted with the algorithms used by the CA system. These algorithms are different from those used for encryption of the actual service, in other words the packets of video, audio and data transport stream. The authorization message means that the receivers are informed respectively through the so called authorization messages distributed to all receivers about the programs that the receiver can decrypt. This information is individual for each receiver, so that any kind of a sortiment of services to be received can be sent to each receiver. On the other hand, the receivers can be grouped so that a whole group of receivers gets the authorization with the same authorization message. Information included in the authorization messages has an individual code for each service which has to correspond to the code transmitted together with the keys, so as to make sure that the authorization is valid. The authorization messages can be sent individually because the decoder of each receiver has its own individual address number.

As due to the fast speed the encryption of the bit streams is a microcircuit implementation and can't be implemented with present-day technology through a program, it is in many cases profitable to implement the encryption on the bit stream level by using for different conditional access systems one and the same encryption algorithm, so that the encryption devices and decryption devices for different conditional access systems are at the hardware level in this respect the same.
When receiving programs of several different conditional access systems there are numerous problems. Whether or not the encryption on the bit stream level is the same for all digital signals, very soon in the future it will be the fact, anyway, that the transmission of digital signals is controlled by a great number of independent conditional access systems, each using several different algorithms of the control data, because of updatings and versions. It is true that each conditional access system has in general one characteristic way of transmitting the control data, but there can be several different versions of it. It is also possible, not very often practiced, however, that one conditional access system has several algorithms in use for transmitting the control data.

For security reasons it is used in known systems smart cards including the encryption keys for decrypting the data, the meaning of which is to act as so called controlled means to receive services transmitted encrypted and against payment. In general there are several offerers of services, so that there have to be several smart cards used either simultaneously or by changing the smart card. One smart card is generally activated to receive a service at a time and others can act only as receivers of information or be ready and waiting to be activated, when the respective service is selected from the receiver. Smart cards are reliable because their construction is very difficult or even impossible to be copied or misused. The term "smart card" means at the moment a card that includes one microprocessor circuit to be connected with the device itself through a serial line. The device supplies the electricity and the clock signal (oscillator) to the smart card in addition to the RESET signal. In the future there will surely be produced also smart cards with several circuits where the connection with the device itself is more complicated including e.g. a parallel-type connection.

In the above described situation the problem will be, how to solve the need to control uniquely the control data algorithms used by a certain conditional access system as well as the possibilities of different conditional access systems to give receiving rights or correspondingly keys for encrypted bit streams. This kind on need arises when wanting to prevent unauthorized receiving of encrypted digital signals, that could be based e.g. on an illegal distribution of receiving rights or keys or on the use of a poorly planned encryption algorithm of the control data, that for some reason can be used more widely than what had been planned also for passing the future algorithms or for decrypting the encryption at least partly. On the other hand, the market situation can sometimes lead to a situation, where a program supplier sells his own digital services by compensating the prices or rents of the receiving devices, and thus wants to make sure that any other program supplier can't use the receivers in question to distribute his own services - at least not without payment. In this kind of situation it will be necessary to control the use of the receiver, from the point of view of the program supplier who compensated the price or rent of the receiver. It is also possible that from some other quarter the program and algorithm data in headers of the transport stream packets of the conditional access system used by the program supplier is copied and programs will be sent illegally. This should preferably be prevented.

Using smart cards to minimize the security risks is also problematic. With respect to connections they are standardized and thus easily distributed to the receivers e.g. by mail. In this way the card can fall into the wrong hands and the information thereof can be copied and used to unauthorized receiving of services.

An object of this invention is to establish a method where the above mentioned problems caused by the use of many different conditional access systems can be solved. It is an object to create above the conditional access systems a method that determines for which purpose the receiver can be used and for which not.

Characteristic for the method is that at least one conditional access system has been determined as control system entitled to control the encryption algorithms used by other conditional access systems and the sending of keys and authorization messages, wherein the control system can change rights of use of the other conditional access systems in the receiver. The receiver to be used with the method and including means for receiving encrypted video, audio and data services and for decrypting the encryption, is characterized in that said means include
- tables relating to the different conditional access systems, each of the tables including an algorithm list used by the conditional access system, said list including the encryption algorithms in use for encrypting the messages and services of the conditional access system,
- a control table of the conditional access systems including a list of the control systems.

The system above the conditional access systems according to the present invention is one or several conditional access system(s) getting more rights than the other conditional access systems, in other words it gets the right to control the rights and ways of use of the other conditional access systems. The system is hereafter called the control system.

As it can be appreciated from what has been stated above, the access management of the receivers can be divided into two parts: 1) management of the control data algorithms and 2) management of the conditional access systems. Thus, the present invention concerns a control method for managing the conditional access systems in respect of their characteristics. Both of the above mentioned fields of access management can be considered to be controlled at least on four principles: 1) by the number of the decoder, 2) by the code of the conditional access system, 3) by a combination of the above mentioned and 4) by a list of different control mechanisms. As the code of the conditional access system according to the proposal for a standard will comprise 256 alternatives for each conditional access system including eventual future variation of the conditional access system or the subsystems thereof, the control system of the receiver can be directed to all the 256 alternatives of a conditional access system, and subsystems of the conditional access system or each conditional access system can be equipped with a necessary mask word by which the subsystems of one conditional access system can be identified. Further, the receiver can have a list for different conditional access systems, including the above mentioned variations for each conditional access system or, correspondingly, a list of those conditional access systems that the receiver is not allowed to use.

The control method in accordance with the present invention can be made reliable so that the control of conditional access systems can not be effected uncontrollably, in other words, when manufacturing the device there will be determined the basic criteria by which the control system in future can be controlled. In the simpliest way, according to the first embodiment of the present invention, the control of the access system can be directed plainly to that code/those codes of the conditional access system, that is/are in use of the device supplier or his customer, and the rights of use in question can't be changed afterwards, unless the receiver were opened and the part in charge of the access rights replaced by a new one. In other words, when manufacturing the receiver it will be equipped with a list of the codes of the conditional access system or systems that have the right to control rights of use of the other conditional access systems.

According to an other embodiment for controlling the access right the system will be implemented flexibly, so that when manufacturing the device it can be equipped with the code of one conditional access system or several systems, that have the possibility not only to control the access right but also to change the codes that entitle to control the access rights. In other words, with help of the control systems included in the list to be feeded to the receiver when manufacturing, it is possible to add or remove codes of new conditional access systems, that is to change the list, whereas the list according to the first embodiment remains unchanged.

According to one characteristic of the invention it is used a separate part to be attached to the receiving device, the so called security module. In addition to the above mentioned lists it can include other electronic parts concerning the security like the parts required for decrypting the bit stream encryption. In addition to the decryption circuit, also the microprocessor of the receiver can be placed in it. An advantage of the security module is that if there appears to be a security risk, e.g. in connection with a wide illegal copying, the module can be changed to a new one in regard to its construction or contents. If necessary, the module can be constructed according to the receiving device so that it does not correspond to any standard. For the security this is a more effective alternative than only to change the smart card. Thereby the receiver can be used without or with the security module so that when receiving a certain service the decryption of messages is effected by the security module only, the receiver only or by the security module and the receiver together. Information of the required combination will be placed in the respective tables of the decoder and/or the module.

In the following the present invention will be described in more detail with reference to the enclosed drawings, where
- Figure 1: illustrates the construction of a PES packet
- Figures 2a and 2b: illustrate the construction of a program stream
- Figures 3a and 3b: illustrate the construction of a transport stream
- Figure 4: illustrates contents of successive packets of a transport stream
- Figure 5: illustrates the construction of a receiver according to the invention
- Figure 6: illustrates a list of algorithms
- Figure 7: illustrates a list of conditional access systems

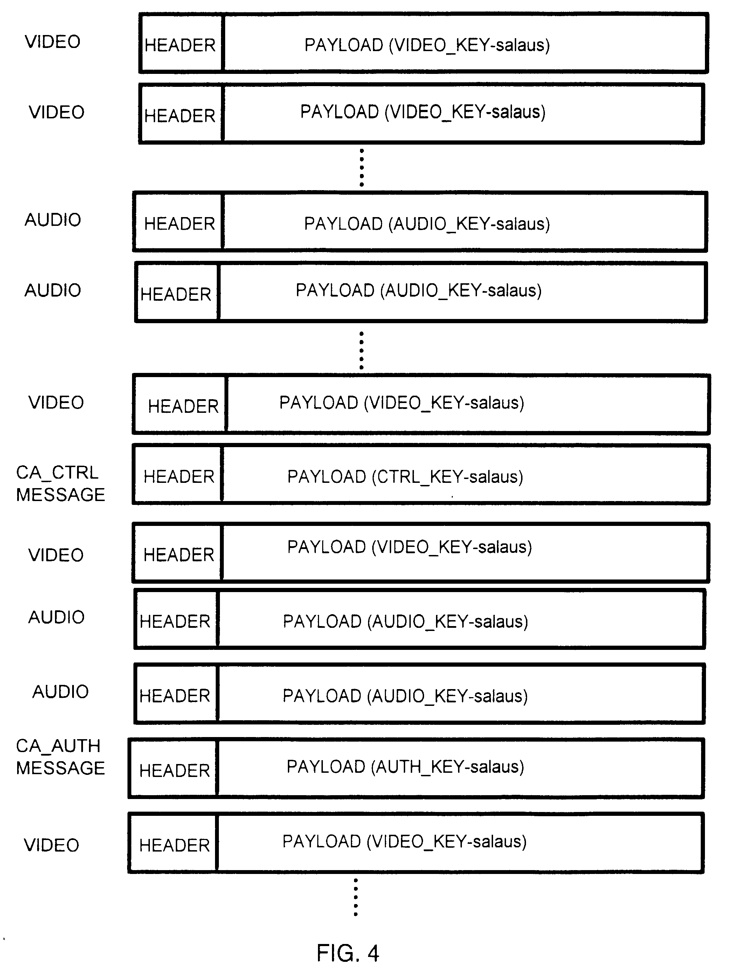

Figures 1 to 3 have already been reported in the general part. The transport stream of figure 3a is also shown in figure 4 that illustrates a part of a typical transport stream. It consists of successive packets presented one below the other, the construction of which in respect of the basic syntax is alike. Each packet includes a header part (HEADER) according to standard MPEG2 and an information part (PAYLOAD). By the included information the packets can be groupped to video packets (VIDEO), audio packets (AUDIO), packets transmitting the control system of the conditional access system (CA_CTR MESSAGE) and packets of the authorization message of the conditional access system. From these the video and audio parts include video and audio information compressed and encrypted in a way characteristic of each conditional access system. As the video and audio information are encrypted on the level of the bit stream by using the different keys, the encryption of them is presented in the figure by the separate keys. VIDEO_KEY means the encryption of the video packet and correspondingly AUDIO_KEY encryption of the audio packet. On the other hand the CA_CTRL MESSAGE packet in the middle of the bit stream describes packets meant for transmitting the control messages of the conditional access system and the CA_AUTH MESSAGE packet describes the authorization messages sent by the conditional access system, including certain parts relating to the construction of the address field of the receiver. These parts are common for all conditional access systems. These two last-mentioned packets are also encrypted with their own encryption keys, which are characteristic of each conditional access system. The encryption can be effected through a program and by using totally different algorithms than for encryption on the level of the bit stream.

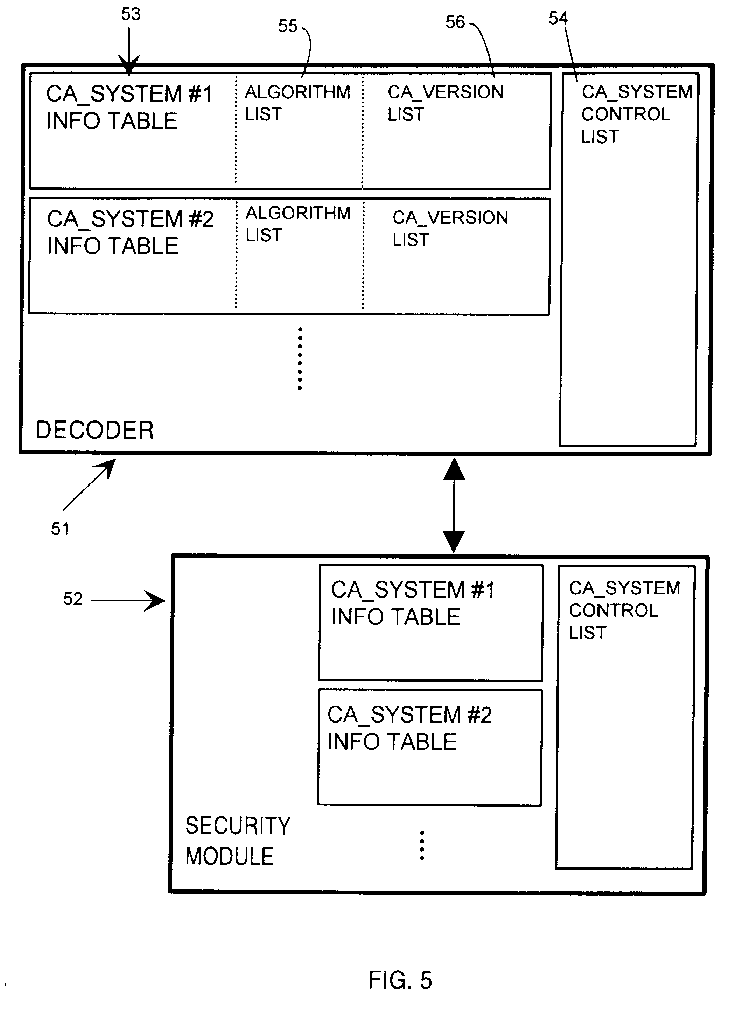

Figure 5 illustrates a decoder 51 according to the present invention with a separate security module (52) according to the present invention attached thereto. The both of them are placed in the receiver, whereby the functions included in the decoder and security module have been assembled already when manufacturing. The both include two kinds of tables: 1) numerous conditional access system tables 53 (CA_system info table) and 2) a control table of conditional access systems 54 (CA_system control list). The conditional access system table 53 includes an algorithm list 55 (algorithm list) and a version list of conditional access systems 56 (CA_version list). The algorithm list 55 includes a list of encryption algorithms eventually in use, by which the messages of the conditional access system have been encrypted. Correspondingly, the version list 56 includes a list of the versions of the respective conditional access system 53 that can be in use, whereas the control list of the conditional access systems 54 includes a list of those conditional access systems by which the rights of use of conditional access systems can be changed. As according to the basic idea of the invention one conditional access system or several systems get the right to control other conditional access systems, the list of these control systems having more rights is thus included in the control table 54.

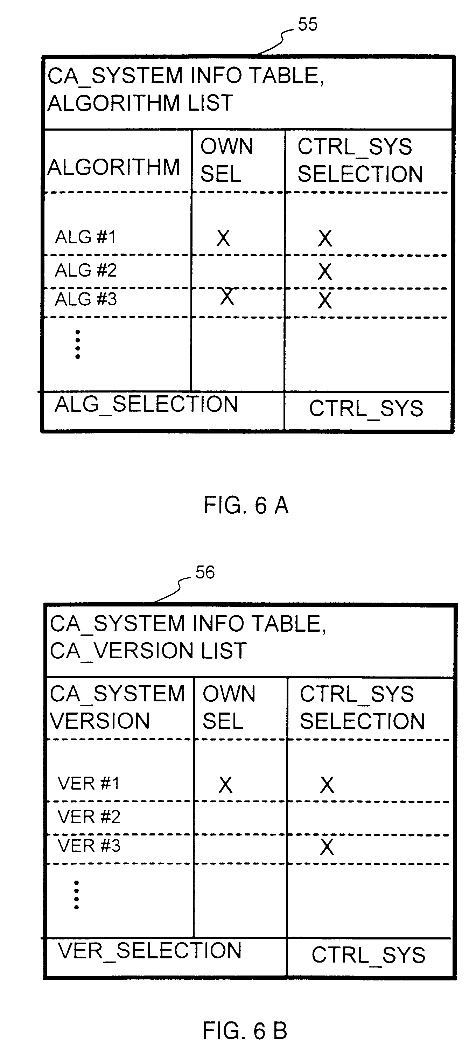

Figure 6 A shows the contents of the algorithm list 55 of figure 5. In consists of two adjacent lists relating to the actual algorithm list ALGORITHM, the first list OWN SEL for the own use of the conditional access system and the other list CTRL_SYS SELECTION for the control system of the conditional access systems. The column marked with X means that the respective algorithm is in use. E.g. algorithm ALG#2 is in use of the control system of conditional access systems whereas algorithms ALG#1 and ALG#3 are as well in the own use of the conditional access system as in use of the control system of the conditional access systems. The algorighm selection part ALG_SELECTION on the bottom of the list is adjustable by the control system. That means that the algorithms are selected either by the control system or by the conditional access system but the decision between these two alternatives will be made by the control system of the conditional access systems. The control system can e.g. let the conditional access system CA_SYSTEM#1, figure 5, decide, that the algorithm ALG#3 will be used for encrypting the messages transmitted by it. In the situation of figure 6A the value of the selection part ALG_SELECTION is CTRL_SYS, in which case the algorithms are selected by the control system.

Correspondingly figure 6B shows the contents of the version list 56 of figure 5 in more details. The figure illustrates the version table of conditional access systems CA_VERSION LIST, that has a separate column OWN_SEL for the conditional access system and a separate column CTRL_SYS SELECTION for the control system of the conditional access systems. Like in figure 6A there is a choice made by the control system between the conditional access system and the control system on the bottom of the list. The version is selected either by the control system or the conditional access system but the decision which of them can choose, is made by the control system of the conditional access systems. The control system can e.g. let the conditional access system CA_SYSTEM#1, figure 5, decide, that the version VER#1 of the conditional access system will be used. In addition to different versions of the conditional access systems, the version system includes also programming differences between the different versions, so that this selection provides also the selection of different program versions in addition to the versions of the conditional access system. In the situation of figure 6B the value of the selection part VER_SELECTION is CTRL_SYS, so that the version is selected by the control system, which means that either version VER#1 or VER#3 can be selected for the use of the conditional access system.

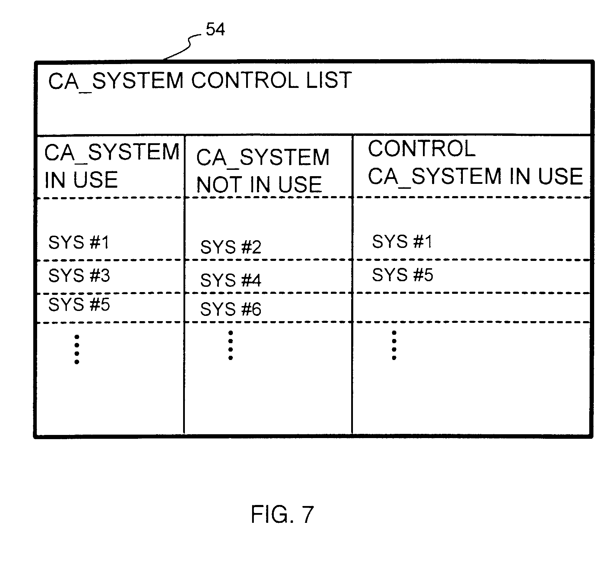

Figure 7 shows the contents of the control table 54 of the conditional access systems of figure 5 (CA_SYSTEM CONTROL LIST). There is a list of possible conditional access systems SYS#1,...,SYS#n in two columns, first of which, CA_SYS IN USE, gives the conditional access systems in use, in figure the systems 1, 3, 5 are in use, and the other, CA_SYS NOT IN USE gives the conditional access systems the use of which absolutely has to be prevented, in figure the systems 2, 4 and 6, etc. In addition, the table includes a third column CONTROL CA_SYSTEM IN USE, where those conditional access systems are listed that act as control systems. This list needs the security arrangements so that at least one control system remains valid when manufacturing and can't be removed from the list. The lists CA_SYSTEM IN USE and CA_SYSTEM NOT IN USE also include the information, which security modules/smart cards can be attached to the receiver in question and correspondingly in case of a security module there is also the information, which receiver system the security module can be attached to (this information is not shown in figure 7). In this way a situation where a particular receiver can only be equipped with desired security modules or smart cards can be controlled.

In the following reference is made again to figure 5, and the security module 52 used together with the smart card in the receiver is described in more details. The security module 52 includes matters from the same points of view as the tables of the decoder 53, but the tables included in the security module and the decoder do not have to have anything in common but the tables can include quite different things than the corresponding table of the decoder. If there appears to be a security risk, e.g. in connection with a wide piracy, the security module can be changed to a new one in regard to its construction or contents, whereby the illegal copying can be prevented or made more complicated and thus a safe system guaranteed. As the known smart cards are standardized in respect of the connection and can be easily distributed e.g. by mail, the security risk of the smart card is bigger compared with the security modules that are bigger in size. A separate security module can be constructed so that the connection with the device, unlike the same with the smart card, is not in accordance with any standard, whereby there is no use of examining a security module of one device manufacturer in respect of piracy or for examining a security module of some other manufacturer. Further, the security module can include such ASIC circuits the illegal copying of which is difficult, because the function of it can be very complicated.

The security module according to the invention is a releasable module that is connected with the device itself through a connector. When speaking about a security module containing more than just a smart card, it means a module with a multipole connection (depending on the application) with the receiver. This kind of security module can contain in principle the same kind of electronics known by the present technology e.g. in receiving devices. As the physical size of the security module or the electronics included therein is not limited like in case of the smart card (bending, thickness of the card etc.) electronic security parts can be placed in it, e.g. for the transmission of digital signals, parts for decrypting the bit stream encryption. As on the other hand it can be complicated to make a connection between the microprocessor and the decryption circuit of the bit stream encryption, safe enough from the point of view of the security, these parts can be placed in the security module as well, if necessary. In addition to these measures it is the purpose to construct the security module so that it would be as difficult as possible to examine the parts of it with electronic equipment.

As mentioned earlier, the security module includes tables with the same construction as the decoder. According to the idea of the security module, however, the information included in it differs from what has been set usually in the decoder by the manufacturing. Therewith it is possible to add new conditional access systems and encryption algorithms for the receiver and to make illegal copying more difficult. A separate security module and a smart card attached thereto can both include said tables, but as concept and to make matters more simple the above mentioned cases have all been combined in the concept of the security module. Thus the tables of the security module can be a combination of tables of a separate module and a separate smart card. The meaning of the tables is to manage situations, where the receiver is intended for receiving transmissions controlled by different conditional access systems.

The receiver can be used either without or with a security module, so that for receiving a certain service the messages are decrypted a) with the security module only, b) with the receiver only or c) with the security module and the receiver together. The information about the required combination is placed in some tables of the decoder and/or the security module.

The method as well as the receiver and the security module according to the present invention provide a transmission and receiving system of video, audio and data services, that is easier to be controlled and that at the same time makes the illegal receiving of encrypted services more difficult.

## Claims

1. A method for controlling different conditional access systems sending video, audio and data services to the receivers entitled to receive said services, wherein each conditional access system encrypts the service to be transmitted, sends encrypted the decryption keys required in the receiver and sends the authorization messages that include at least information about those programs that the receiver is entitled to decrypt, **characterized** in that at least one of the conditional access systems is determined as control system entitled to control the encryption algorithms used by other conditional access systems and the sending of keys and authorization messages, wherein the control system can change rights of use of other conditional access systems in the receiver.

2. A method in accordance with claim 1, characterized in that with said at least one control system also control systems can be controlled, whereby said control system can be used for determining new control systems and removing those.

3. A receiver for receiving video, audio and data services, said receiver comprising a decoder (51) for receiving encrypted video, audio and data services and decrypting the encryption, **characterized** in that said decoder (51) comprises
- tables (53) relating to different conditional access systems, each including an algorithm list (55) used by the conditional access system, said list consisting of encryption algorithms in use, by which the messages and services of the conditional access system have been encrypted,
- a control table (54) of conditional access systems including a list of control systems, which are entitled to control encryption algorithms used by other conditional access systems.

4. A receiver in accordance with claim 3, **characterized** in that it comprises a detachable security module (52) also including
- said tables (53) relating to different conditional access systems, each including an algorithm list (55) used by the conditional access system, said list consisting of encryption algorithms in use, by which the messages and services of the conditional access system have been encrypted,
- said control table (54) of conditional access systems including a list of control systems.

5. A receiver in accordance with claim 3 or 4, **characterized** in that each table (53) relating to the conditional access system further includes a version list (56) of the conditional access system including a list of those versions of the respective conditional access system (53) that are in use.

6. A receiver in accordance with claim 3 or 4, **characterized** in that each algorithm of the algorithm list (55) has a first information (OWN SEL) indicating whether the algorithm is in the own use of the conditional access system, and an other information (CTRL_SYS SELECTION) indicating whether the algorithm is in use of the control system.

7. A receiver in accordance with claim 6, **characterized** in that the control system decides whether the algorithm is selected by the control system or the conditional access system.

8. A receiver in accordance with claim 5, **characterized** in that each version of the conditional access system (53) included in the version list (56) of the conditional access system has a first information (OWN SEL) indicating whether the version can be selected for use of the conditional access system by the conditional access system, and an other information (CNTRL_SYS SELECTION) indicating whether the version can be selected for use of the conditional access system by the control system.

9. A receiver in accordance with claim 3 or 4, **characterized** in that the control system decides, whether the version will be selected by the control system or the conditional access system.

10. A receiver in accordance with claim 3 or 4, **characterized** in that the control table (54) of conditional access systems includes a first list (CA_SYSTEM NOT IN USE) indicating those conditional access systems that are not in use of the receiver, and an other list (CA_SYSTEM IN USE) indicating those conditional access systems that are in use of the receiver.

11. A receiver in accordance with claim 3, 4 or 10, **characterized** in that the control table (54) of the conditional access systems includes a list (CONTROL CA_SYSTEM IN USE) indicating the conditional access systems acting as control systems.

12. A receiver in accordance with claim 11, **characterized** in that said list of control systems comprises a security system to secure that at least one control system is such that it cannot be removed from the list.

13. A receiver in accordance with claim 3 or 4, **characterized** in that the information included in the tables of the conditional access systems (53) and the information included in the control table (54) of the conditional access system are recorded in the receiver when the receiver is manufactured.

14. A receiver in accordance with claim 13, **characterized** in that the information included in the tables of the conditional access systems (53) and the information included in the control table (54) of the conditional access system can be updated with the encrypted messages received together with the received data.

15. A receiver in accordance with claim 13, **characterized** in that the information of the tables of the conditional access systems (53) and the information of the control table (54) of the conditional access system can be updated with a smart card to be connected with the receiver.

16. A receiver in accordance with claim 15, **characterized** in that it has a connection for connecting the smart card with the security module (52).

17. A receiver in accordance with claim 4, 15 or 16, **characterized** in that the receiver (51) includes an information indicating kinds of security modules and smart cards which can be connected.

18. A receiver in accordance with any of the claims 3 to 17, **characterized** in that when receiving a certain type of service, only information saved in the receiver (51) is used for decrypting messages.

19. A receiver in accordance with any of the claims 3 to 17, **characterized** in that when receiving a certain type of service, only information saved in the security module (52) is used for decrypting messages.

20. A receiver in accordance with any of the claims 3 to 17, **characterized** in that when receiving a certain type of service, information saved both in the security module (52) and in the receiver (51) is used for decrypting messages.

21. A releasable security module (52) for a receiver receiving video, audio and data services, consisting of a decoder (51) for receiving encrypted video, audio and data services and for decrypting the encryption, said security module including information for the decoder for decrypting the encrypted service, **characterized** in that it comprises
- tables (53) relating to different conditional access systems, each table including an algorithm list (55) used by the conditional access system, said algorithm list including a list of encryption algorithms in use, by which the messages and services have been encrypted,
- a control table (54) of conditional access systems including a list of control systems, which are entitled to control encryption algorithms used by other conditional access systems.

22. A security module in accordance with claim 21, **characterized** in that it includes an information indicating a kind of receiver to which it can be connected.

## Patentansprüche

1. Verfahren zum Steuern verschiedener bedingter Zugriffssysteme, die Video-, Audio- und Datendienste zu Empfängern senden, die zum Empfangen der genannten Dienste berechtigt sind, wobei jedes bedingte Zugriffssystem den zu sendenden Dienst verschlüsselt, die im Empfänger benötigten Schlüssel verschlüsselt sendet und die Autorisierungsmeldungen sendet, die wenigstens Informationen über diejenigen Programme beinhalten, die der Empfänger zu entschlüsseln berechtigt ist, dadurch gekennzeichnet, daß wenigstens eines der bedingten Zugriffssysteme als Steuersystem eingerichtet ist, das berechtigt ist, die Verschlüsselungsalgorithmen, die von anderen bedingten Zugriffssystemen verwendet werden, das Senden von Schlüsseln und von Autorisierungsmeldungen zu steuern, wobei das Steuersystem Benutzungsrechte anderer bedingter Zugriffssysteme in dem Empfänger ändern kann.

2. Verfahren nach Anspruch 1, dadurch gekennzeichnet, daß mit dem genannten, wenigstens einem Steuersystem auch Steuersysteme gesteuert werden können, so daß das genannte Steuersystem zum Einrichten neuer Steuersysteme und zum Entfernen derselben benutzt werden kann.

3. Empfänger zum Empfangen von Video-, Audio- und Datendiensten, wobei der genannte Empfänger einen Decodierer (51) zum Empfangen verschlüsselter Video-, Audio- und Datendienste zum Entschlüsseln der Verschlüsselung umfaßt, dadurch gekennzeichnet, daß der genannte Decodierer (51) folgendes umfaßt:
- Tabellen (53) in bezug auf verschiedene bedingte Zugriffssysteme, die jeweils eine Algorithmusliste (55) beinhalten, die von dem bedingten Zugriffssystem verwendet wird, wobei die genannte Liste aus den verwendeten Verschlüsselungsalgorithmen bestehen, mit denen die Meldungen und Dienste des bedingten Zugriffssystems verschlüsselt wurden,
- eine Steuertabelle (54) von bedingten Zugriffssystemen, die eine Liste von Steuersystemen beinhaltet, die berechtigt sind, die von anderen bedingten Zugriffssystemen verwendeten Verschlüsselungsalgorithmen zu steuern.

4. Empfänger nach Anspruch 3, dadurch gekennzeichnet, daß er ein entfernbares Sicherheitsmodul (52) umfaßt, das auch folgendes beinhaltet:
- die genannten Tabellen (53) in bezug auf verschiedene bedingte Zugriffssysteme, die jeweils eine Algorithmusliste (55) beinhalten, die von dem bedingten Zugriffssystem verwendet wird, wobei die genannte Liste aus den verwendeten Verschlüsselungsalgorithmen besteht, mit denen die Meldungen und Dienste des bedingten Zugriffssystems verschlüsselt wurden,
- die genannte Steuertabelle (54) bedingter Zugriffssysteme einschließlich einer Liste von Steuersystemen.

5. Empfänger nach Anspruch 3 oder 4, dadurch gekennzeichnet, daß jede Tabelle (53) in bezug auf das bedingte Zugriffssystem ferner eine Versionsliste (56) des bedingten Zugriffssystems einschließlich einer Liste derjenigen Versionen des jeweiligen bedingten Zugriffssystems (53) beinhaltet, die in Gebrauch sind.

6. Empfänger nach Anspruch 3 oder 4, dadurch gekennzeichnet, daß jeder Algorithmus der Algorithmusliste (55) eine erste Information (OWN SEL) hat, die angibt, ob der Algorithmus von dem bedingten Zugriffssystem selbst verwendet wird, und eine weitere Information (CTRL_SYS SELECTION), die angibt, ob der Algorithmus vom Steuersystem verwendet wird.

7. Empfänger nach Anspruch 6, dadurch gekennzeichnet, daß das Steuersystem entscheidet, ob der Algorithmus vom Steuersystem oder vom bedingten Zugriffssystem gewählt wird.

8. Empfänger nach Anspruch 5, dadurch gekennzeichnet, daß jede Version des bedingten Zugriffssystems (53), die in der Versionsliste (56) des bedingten Zugriffssystems enthalten ist, eine erste Information (OWN SEL) hat, die angibt, ob die Version für die Verwendung des bedingten Zugriffssystems durch das bedingte Zugriffssystem gewählt werden kann, und eine weitere Information (CNTRL_SYS SELECTION), die angibt, ob die Version für die Verwendung des bedingten Zugriffssystems durch das Steuersystem gewählt werden kann.

9. Empfänger nach Anspruch 3 oder 4, dadurch gekennzeichnet, daß das Steuersystem entscheidet, ob die Version von dem Steuersystem oder von dem bedingten Zugriffssystem gewählt wird.

10. Empfänger nach Anspruch 3 oder 4, dadurch gekennzeichnet, daß die Steuertabelle (54) bedingter Zugriffssysteme eine erste Liste (CA_SYSTEM NOT IN USE) beinhaltet, die diejenigen bedingten Zugriffssysteme angibt, die nicht vom Empfänger benutzt werden, und eine weitere Liste (CA_SYSTEM IN USE), die diejenigen bedingten Zugriffssysteme angibt, die vom Empfänger benutzt werden.

11. Empfänger nach Anspruch 3, 4 oder 10, dadurch gekennzeichnet, daß die Steuertabelle (54) der bedingten Zugriffssysteme eine Liste (CONTROL CA_ SYSTEM IN USE) beinhaltet, die die bedingten Zugriffssysteme angibt, die als Steuersysteme fungieren.

12. Empfänger nach Anspruch 11, dadurch gekennzeichnet, daß die genannte Liste von Steuersystemen ein Sicherheitssystem umfaßt, um sicherzustellen, daß wenigstens ein Steuersystem derartig ist, daß es nicht aus der Liste entfernt werden kann.

13. Empfänger nach Anspruch 3 oder 4, dadurch gekennzeichnet, daß die in den Tabellen der bedingten Zugriffssysteme (53) enthaltene Information und die in der Steuertabelle (54) des bedingten Zugriffssystems enthaltene Information bei der Herstellung des Empfängers in diesem vermerkt werden.

14. Empfänger nach Anspruch 13, dadurch gekennzeichnet, daß die in den Tabellen der bedingten Zugriffssysteme (53) enthaltene Information und die in der Steuertabelle (54) des bedingten Zugriffssystems enthaltene Information mit den empfangenen verschlüsselten Meldungen zusammen mit den empfangenen Daten aktualisiert werden können.

15. Empfänger nach Anspruch 13, dadurch gekennzeichnet, daß die in den Tabellen der bedingten Zugriffssysteme (53) enthaltene Information und die in der Steuertabelle (54) des bedingten Zugriffssystems enthaltene Information mit einer Smart-Card aktualisiert werden können, die mit dem Empfänger verbunden wird.

16. Empfänger nach Anspruch 15, dadurch gekennzeichnet, daß er einen Anschluß zum Verbinden der Smart-Card mit dem Sicherheitsmodul (52) hat.

17. Empfänger nach Anspruch 4, 15 oder 16, dadurch gekennzeichnet, daß der Empfänger (51) eine Information beinhaltet, die Arten von Sicherheitsmodulen und Smart-Cards angibt, die angeschlossen werden können.

18. Empfänger nach einem der Ansprüche 3 bis 17, dadurch gekennzeichnet, daß beim Empfangen eines bestimmten Typs von Dienst nur im Empfänger (51) gespeicherte Informationen zum Entschlüsseln von Meldungen verwendet werden.

19. Empfänger nach einem der Ansprüche 3 bis 17, dadurch gekennzeichnet, daß beim Empfangen eines bestimmten Typs von Dienst nur im Sicherheitsmodul (52) gespeicherte Informationen zum Entschlüsseln von Meldungen verwendet werden.

20. Empfänger nach einem der Ansprüche 3 bis 17, dadurch gekennzeichnet, daß beim Empfangen eines bestimmten Typs von Dienst sowohl im Sicherheitsmodul (52) als auch im Empfänger (51) gespeicherte Informationen zum Entschlüsseln von Meldungen verwendet werden.

21. Lösbares Sicherheitsmodul (52) für einen Empfänger zum Empfangen von Video-, Audio- und Datendiensten, bestehend aus einem Decodierer (51) zum Empfangen verschlüsselter Video-, Audio- und Datendienste und zum Entschlüsseln der Verschlüsselung, wobei das genannte Sicherheitsmodul Informationen für den Decodierer zum Entschlüsseln des verschlüsselten Dienstes enthält, dadurch gekennzeichnet, daß es folgendes umfaßt:
- Tabellen (53) in bezug auf verschiedene bedingte Zugriffssysteme, wobei jede Tabelle eine Algorithmusliste (55) enthält, die von dem bedingten Zugriffssystem verwendet wird, wobei die genannte Algorithmusliste eine Liste aus verwendeten Verschlüsselungsalgorithmen beinhaltet, mit denen die Meldungen und Dienste verschlüsselt wurden,
- eine Steuertabelle (54) von bedingten Zugriffssystemen, die eine Liste von Steuersystemen beinhaltet, die berechtigt sind, die von anderen bedingten Zugriffssystemen verwendeten Verschlüsselungsalgorithmen zu steuern.

22. Sicherheitsmodul nach Anspruch 21, dadurch gekennzeichnet, daß es eine Information beinhaltet, die eine Art von Empfänger angibt, mit dem es verbunden werden kann.

## Revendications

1. Procédé de commande de différents systèmes d'accès conditionnel transmettant des services vidéo, audio et de données aux récepteurs habilités à recevoir lesdits services, dans lequel chaque système d'accès conditionnel crypte le service devant être transmis, transmet, cryptées, les clefs de décryptage requises dans le récepteur et transmet les messages d'autorisation qui incluent au moins les informations relatives à ces programmes que le récepteur est habilité à décrypter, caractérisé en ce qu'au moins l'un des systèmes d'accès conditionnel est déterminé en tant que système de commande habilité à commander les algorithmes de cryptage utilisés par d'autres systèmes d'accès conditionnel et la transmission des clefs et des messages d'autorisation, dans lequel le système de commande peut modifier les droits d'utilisation des autres systèmes d'accès conditionnel dans le récepteur.

2. Procédé selon la revendication 1, caractérisé en ce qu'avec ledit au moins un système de commande des systèmes de commande peuvent également être commandés, de sorte que ledit système de commande peut être utilisé pour déterminer de nouveaux systèmes de commande et les éliminer.

3. Récepteur destiné à recevoir des services vidéo, audio et de données, ledit récepteur comprenant un décodeur (51) pour recevoir des services vidéo, audio et de données cryptés et décrypter le cryptage, caractérisé en ce que ledit décodeur (51) comprend
- des tableaux (53) se rapportant à différents systèmes d'accès conditionnel, chacun incluant une liste d'algorithmes (55) utilisée par le système d'accès conditionnel, ladite liste étant constituée d'algorithmes de cryptage en utilisation, au moyen desquels les messages et les services du système d'accès conditionnel ont été cryptés,
- un tableau de commande (54) des systèmes d'accès conditionnel incluant une liste de systèmes de commande, qui sont habilités à commander les algorithmes de cryptage utilisés par d'autres systèmes d'accès conditionnel.

4. Récepteur selon la revendication 3, caractérisé en ce qu'il comprend un module de sécurité amovible (52), incluant également
- lesdits tableaux (53) se rapportant à différents systèmes d'accès conditionnel, chacun incluant une liste d'algorithmes (55) utilisés par le système d'accès conditionnel, ladite liste étant constituée d'algorithmes de cryptage en utilisation, au moyen desquels les messages et les services du système d'accès conditionnel ont été cryptés,
- ledit tableau de commande (54) des systèmes d'accès conditionnel incluant une liste de systèmes de commande.

5. Récepteur selon la revendication 3 ou 4, caractérisé en ce que chaque tableau (53) se rapportant au système d'accès conditionnel inclut, en outre, une liste de versions (56) du système d'accès conditionnel incluant une liste de ces versions du système d'accès conditionnel respectif (53) qui sont en utilisation.

6. Récepteur selon la revendication 3 ou 4, caractérisé en ce que chaque algorithme de la liste d'algorithmes (55) possède des premières informations (OWN SEL) indiquant si l'algorithme fait l'objet de la propre utilisation du système d'accès conditionnel, et d'autres informations (CTRL_SYS SELECTION) indiquant si l'algorithme fait l'objet d'une utilisation par le système de commande.

7. Récepteur selon la revendication 6, caractérisé en ce que le système de commande décide si l'algorithme est sélectionné par le système de commande ou par le système d'accès conditionnel.

8. Récepteur selon la revendication 5, caractérisé en ce que chaque version du système d'accès conditionnel (53) incluse dans la liste de versions (56) du système d'accès conditionnel possède des premières informations (OWN SEL) indiquant si la version peut être sélectionnée, en vue de son utilisation par le système d'accès conditionnel, par le système d'accès conditionnel, et d'autres informations (CNTRL_SYS SELECTION) indiquant si la version peut être sélectionnée ou non pour l'utilisation du système d'accès conditionnel par le système de commande.

9. Récepteur selon la revendication 3 ou 4, caractérisé en ce que le système de commande décide si la version sera sélectionnée par le système de commande ou par le système d'accès conditionnel.

10. Récepteur selon la revendication 3 ou 4, caractérisé en ce que le tableau de commande (54) des systèmes d'accès conditionnel inclut une première liste (CA_SYSTEM NOT IN USE) indiquant ces systèmes d'accès conditionnel qui ne font pas l'objet d'une utilisation par le récepteur, et une autre liste (CA_SYSTEM IN USE) indiquant ces systèmes d'accès conditionnel qui font l'objet d'une utilisation par le récepteur.

11. Récepteur selon la revendication 3, 4 ou 10, caractérisé en ce que le tableau de commande (54) des systèmes d'accès conditionnel inclut une liste (CONTROL CA_SYSTEM IN USE) indiquant les systèmes d'accès conditionnel agissant en tant que systèmes de commande.

12. Récepteur selon la revendication 11, caractérisé en ce que ladite liste des systèmes de commande comprend un système de sécurité permettant de s'assurer qu'au moins un système de commande est tel qu'il ne peut pas être éliminé de la liste.

13. Récepteur selon la revendication 3 ou 4, caractérisé en ce que les informations incluses dans les tableaux des systèmes d'accès conditionnel (53) et les informations incluses dans le tableau de commande (54) du système d'accès conditionnel sont enregistrées dans le récepteur lorsque le récepteur est fabriqué.

14. Récepteur selon la revendication 13, caractérisé en ce que les informations incluses dans les tableaux des systèmes d'accès conditionnel (53) et les informations incluses dans le tableau de commande (54) du système d'accès conditionnel peuvent être actualisées par les messages cryptés reçus conjointement avec les données reçues.

15. Récepteur selon la revendication 13, caractérisé en ce que les informations des tableaux des systèmes d'accès conditionnel (53) et les informations du tableau de commande (54) du système d'accès conditionnel peuvent être actualisées par une carte intelligente devant être connectée au récepteur.

16. Récepteur selon la revendication 15, caractérisé en ce qu'il comporte une connexion permettant de connecter la carte intelligente au module de sécurité (52).

17. Récepteur selon la revendication 4, 15 ou 16, caractérisé en ce que le récepteur (51) inclut des informations indiquant les types de modules de sécurité et de cartes intelligentes qui peuvent être connectés.

18. Récepteur selon l'une quelconque des revendications 3 à 17, caractérisé en ce que lors de la réception d'un certain type de service, seules les informations sauvegardées dans le récepteur (51) sont utilisées pour décrypter les messages.

19. Récepteur selon l'une quelconque des revendications 3 à 17, caractérisé en ce que lors de la réception d'un certain type de service, seules les informations sauvegardées dans le module de sécurité (52) sont utilisées pour décrypter les messages.

20. Récepteur selon l'une quelconque des revendications 3 à 17, caractérisé en ce que lors de la réception d'un certain type de service, les informations sauvegardées à la fois dans le module de sécurité (52) et dans le récepteur (51) sont utilisées pour décrypter les messages.

21. Module de sécurité amovible (52) destiné à un récepteur recevant des services vidéo, audio et de données, constitué d'un décodeur (51) pour recevoir des services vidéo, audio et de données cryptés et pour décrypter le cryptage, ledit module de sécurité incluant des informations permettant au décodeur de décrypter le service crypté, caractérisé en ce qu'il comprend
- des tableaux (53) se rapportant à différents systèmes d'accès conditionnel, chaque tableau incluant une liste d'algorithmes (55) utilisés par le système d'accès conditionnel, ladite liste d'algorithmes incluant une liste d'algorithmes de cryptage en utilisation, au moyen desquels les messages et les services ont été cryptés,
- un tableau de commande (54) des systèmes d'accès conditionnel incluant une liste de systèmes de commande, qui sont habilités à commander des algorithmes de cryptage utilisés par d'autres systèmes d'accès conditionnel.

22. Module de sécurité selon la revendication 21, caractérisé en ce qu'il inclut des informations indiquant un type de récepteur auquel il peut être connecté.
